# DEMANDE DE BREVET EUROPEEN

(11) **EP 4 800 736 A1**
(43) Date de publication de la demande: **02.09.2026**
(21) Numéro de dépôt: 26159700.9
(22) Date de dépôt: 19.02.2026
(51) Int. Cl.: H01H 85/00

(54) **SYSTEME DE PROTECTION ELECTRIQUE POUR AERONEF, AVEC LIAISON FUSIBLE SUPRACONDUCTRICE**

(30) Priorité: 28.02.2025 FR 2502031
(71) Demandeur: Airbus (S.A.S.), 31700 Blagnac (FR)
(72) Inventeur: CALDERON MENDOZA, Edwin, 31700 Blagnac (FR); BARUSCO, Pedro, 31700 Blagnac (FR); KHARCHE, Swapnil, 31700 Blagnac (FR); CHAPER, Camille, 31700 Blagnac (FR); YBANEZ, Ludovic, 31700 Blagnac (FR); NILSSON, Emelie, 31700 Blagnac (FR); ROUQUETTE, Jean-François, 31700 Blagnac (FR)
(74) Mandataire: BCF Global

(57) **Abrégé**

L'invention concerne un système de protection électrique pour une liaison électrique d'un circuit électrique d'un aéronef, par exemple un aéronef à propulsion à hydrogène, comprenant un élément, dit élément fusible, réalisé en matériau qui présente des propriétés supraconductrices dans un premier état, dit état supraconducteur, et des propriétés non supraconductrices dans un deuxième état, dit état normal, la transition de l'état supraconducteur à l'état normal dégageant une énergie de transition, le système de protection comprenant également un dispositif, dit dispositif de sécurité, conformé pour ouvrir la liaison électrique lorsque l'élément fusible passe de l'état supraconducteur à l'état normal.

## Description

### Domaine technique

La présente invention se rapporte à un système de protection électrique pour une liaison électrique d'un circuit électrique d'un aéronef, particulièrement un aéronef à propulsion à hydrogène.

### Technique antérieure

Dans un effort de réduction de l'impact carbone dû à l'aviation, la Titulaire a développé des projets d'aéronefs dont les moteurs fonctionnent avec une propulsion à hydrogène. Pour améliorer la compétitivité de ce type de propulsion, la Titulaire a mis au point des équipements spécifiques, notamment, une chaîne propulsive comportant un moteur supraconducteur. Une telle chaîne permet de conduire des courants ayant des intensités plus élevées, et il s'avère alors nécessaire de gérer de manière fiable de tels courants de fonctionnement nominaux élevés, et des courants de défaut encore plus élevés.

Le but de l'invention est d'améliorer la situation actuelle.

### Résumé

A cet effet, il est proposé un système de protection électrique pour une liaison électrique d'un circuit électrique d'un aéronef, par exemple un aéronef à propulsion à hydrogène et/ou comprenant un moteur supraconducteur, comprenant un élément, dit élément fusible, réalisé en matériau qui présente des propriétés supraconductrices dans un premier état, dit état supraconducteur, et des propriétés non supraconductrices dans un deuxième état, dit état normal, la transition de l'état supraconducteur à l'état normal dégageant une énergie de transition, le système de protection comprenant également un dispositif, dit dispositif de sécurité, conformé pour ouvrir la liaison électrique lorsque l'élément fusible passe de l'état supraconducteur à l'état normal.

Ainsi, en cas de court circuit dans le circuit électrique, l'intensité augmente brutalement, déclenche la transition de l'état supraconducteur à l'état normal de l'élément fusible, et le dispositif de sécurité ouvre la liaison électrique, ce qui, de fait, protège le circuit électrique.

Selon un autre aspect, le système comprend un échangeur de chaleur connecté thermiquement à l'élément fusible, conformé de sorte à maintenir l'élément fusible dans l'état supraconducteur.

Selon un autre aspect, le dispositif de sécurité est un moyen d'absorption de l'énergie de transition.

Selon un autre aspect, le moyen d'absorption de l'énergie de transition comprend de la silice.

Selon un autre aspect, la silice est conformée pour fondre sous l'effet de l'énergie de transition, puis de solidifier en refroidissant.

Selon un autre aspect, le moyen d'absorption de l'énergie de transition est sous forme de gel.

Selon un autre aspect, le matériau de l'élément fusible est du BSCCO et/ou du YBCO et/ou du MgB2 et/ou REBCO.

Selon un autre aspect, le système de protection comprend ladite liaison électrique.

L'invention a également pour objet un circuit électrique, par exemple chaîne propulsive d'un aéronef, la chaîne propulsive comprenant un moteur supraconducteur, le circuit comprenant le système de protection tel que décrit précédemment.

L'invention a également pour objet un aéronef comprenant un circuit électrique tel que décrit précédemment.

### Brève description des dessins

D'autres caractéristiques, détails et avantages apparaîtront à la lecture de la description détaillée ci-après, et à l'analyse des dessins annexés, sur lesquels :
**Fig. 1**

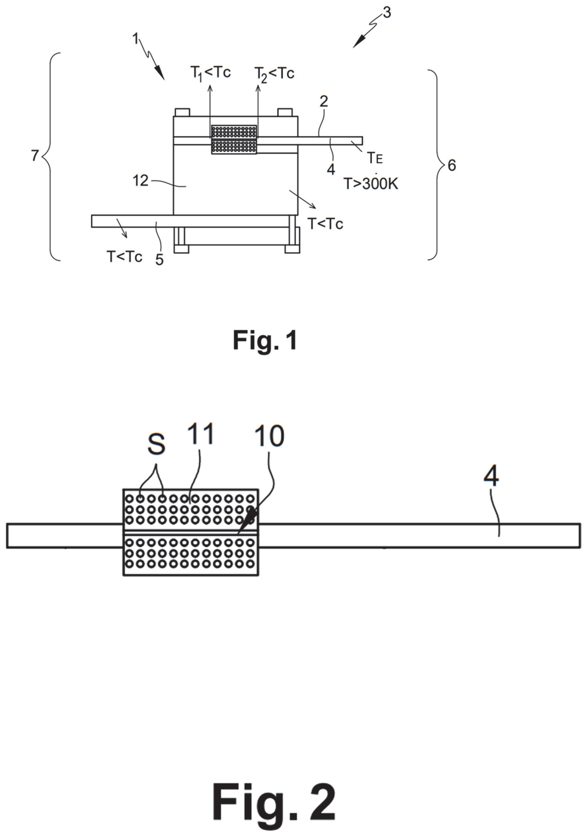

   [Fig. 1] est une vue schématique d'une coupe longitudinale d'un système de protection électrique intégré dans une liaison électrique, selon la présente invention, dans un mode de fonctionnement normal.
**Fig. 2**
   [Fig. 2] est une vue schématique de détail du système de la figure 1.
**Fig. 3**

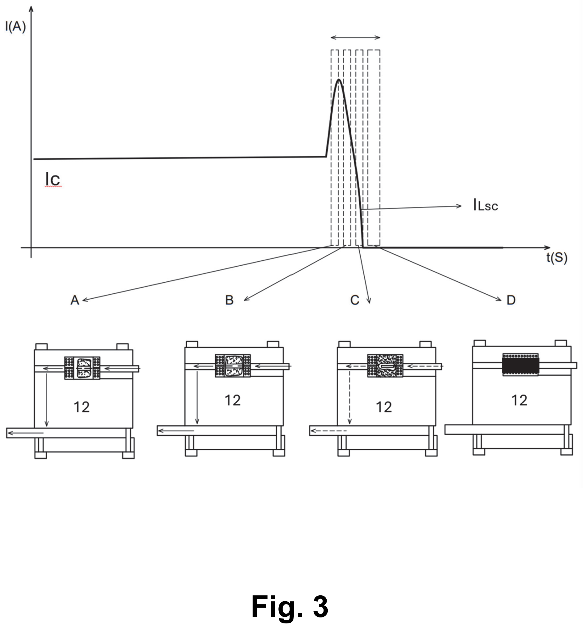

   [Fig. 3] illustre l'évolution au cours du temps d'un courant électrique circulant dans la liaison électrique en cas de court-circuit, selon des phases successives A, B, C et D.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en oeuvre relativement simplifiées de la présente invention. Comme l'homme du métier le comprend, d'autres mises en oeuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en oeuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme il ressort des figures, l'invention a pour objet un système 1 de protection électrique d'une liaison électrique 2. La liaison électrique 2 fait partie d'un circuit électrique 3 d'un aéronef, par exemple un aéronef à propulsion à hydrogène. Le circuit électrique 3 est par exemple une chaîne propulsive de l'aéronef, comportant un ou des équipements supraconducteurs, par exemple un moteur supraconducteur.

Sur les figures, la liaison 2 comprend un premier câble, dit câble d'alimentation, référencé 4, un câble supraconducteur, référencé 5, et le système de protection 1 disposé entre les câbles 4 et 5. Le câble d'alimentation 4 est connecté, directement ou indirectement, à une pile à combustible 6. Le câble supraconducteur 5 est connecté, directement ou indirectement, à la propulsion 7.

Comme visible sur les figures, le système de protection 1 comprend un élément fusible 10. Sur le mode de réalisation illustré, l'élément fusible 10 se présente sous la forme d'un ruban ou lien supraconducteur.

L'élément fusible 10 est réalisé en un matériau qui présente des propriétés supraconductrices dans un premier état, dit état supraconducteur, et des propriétés non supraconductrices dans un deuxième état, dit état normal.

L'une des propriétés supraconductrices connues est que, dans l'état supraconducteur, la résistance électrique du matériau est nulle, tandis que, dans l'état normal, le matériau présente une résistance électrique non nulle.

Le matériau est dans l'état supraconducteur quand il est soumis à une température inférieure à une température dite critique Tc et/ou à un champ magnétique dit champ magnétique critique, correspondant à un courant électrique critique Ic.

Sous l'effet d'une température supérieure ou égale à la température critique Tc et/ou d'un courant électrique supérieur ou égal au courant critique Ic, le matériau subit une transition de l'état supraconducteur à l'état normal qui dégage une énergie dite énergie de transition. L'énergie de transition peut être dégagée sous forme d'arc électrique. Plus précisément, lors de la transition de l'état supraconducteur à l'état normal, il se produit un quench. Le matériau commence à chauffer puis à fondre. Dans un dernier temps, quand le matériau fondu rompt, un arc électrique est généré.

On choisit de préférence un matériau supraconducteur avec une température critique élevée.

Le matériau supraconducteur est par exemple du BSCCO (oxyde mixte de bismuth, de calcium, de cuivre et de strontium) et/ou du YBCO (oxyde mixte de baryum, de cuivre et d'yttrium) et/ou du MgB2 et/ou ReBCO (oxyde mixtes de baryum, de cuivre et de terre rare).

Dans le cas du ReBCO, on choisit par exemple un ruban de quelques millimètres, par exemple entre 1mm et 10mm, par exemple entre 15mm et 20mm, par exemple entre 10mm et 15mm de largueur. La longueur du ruban est de quelques centimètres, par exemple entre 2 cm et 5 cm. L'épaisseur est par exemple de 100 nm. Le courant critique à une température critique Tc de 77K est par exemple compris entre 800 A et 1500A, par exemple entre 1000 A et 1200 A.

Comme il ressort des figures, le système de protection 1 comprend également un dispositif de sécurité 11 pour couper la liaison électrique 2 lors de la transition de l'état supraconducteur vers l'état normal de l'élément fusible 10.

Le dispositif de sécurité 11 est par exemple un moyen d'absorption de l'énergie de transition. Lors de la transition de l'état supraconducteur à l'état normal, l'énergie, y compris sous forme d'arc électrique plasma, est absorbée par le dispositif de sécurité 11.

Selon une variante, le moyen d'absorption de l'énergie de transition 11 comprend un matériau à capacité thermique élevée, tel de la silice, qui se présente sous forme de grains (notés S sur la figure 2) dans la configuration de fonctionnement normal de la liaison électrique 2. Sous l'effet de l'énergie de transition, les grains de silice fondent, puis solidifient en refroidissant. L'absorption d'énergie permet de refroidir l'arc plasma puis de l'éteindre, et garantit également son confinement sans aucune fuite.

Alternativement ou en complément, le moyen d'absorption de l'énergie de transition est sous forme de gel.

Avantageusement, une boîte 12 contient l'élément fusible 10 et le dispositif de sécurité 11. Dans la boîte 12, le lien supraconducteur connecte le câble d'alimentation 4 au câble supraconducteur 5. L'échangeur thermique 13 connecte électriquement une partie (gauche sur la figure 1) du fusible 10 au câble supraconducteur 5.

Comme visible sur les figures, le système de protection 1 comprend un échangeur de chaleur 13. L'échangeur de chaleur 13 est connecté thermiquement à la boîte 12, à une portion du câble d'alimentation 4 et/ou une portion du câble supraconducteur 5.

Sur les figures, l'échangeur 13 est fixé, de préférence en contact avec, la boîte 12. De préférence, la boîte 12 est réalisé en matériau présentant une très grande conduction thermique, ce qui assure un bon transfert thermique entre l'échangeur de chaleur 13 et l'élément fusible 10. Il s'agit par exemple d'un matériau non métallique qui présente un taux de dégazage raisonnablement faible dans un environnement sous vide, conducteur thermique et isolant électrique, comme une céramique, tel que de l'oxyde d'aluminium.

Sur les figures, l'échangeur de chaleur 13 est fixé, de préférence en contact, à une portion du câble d'alimentation 4.

Sur les figures, l'échangeur de chaleur 13 est fixé, de préférence en contact, à une portion du câble supraconducteur 5.

L'échangeur de chaleur 13 assure le maintien à température cryogénique du câble supraconducteur 5 et l'élément fusible 10. Par température cryogénique, on entend une température inférieure à la température critique du câble 5 et de l'élément fusible 10. Si le câble 5 et le fusible n'ont pas la même température critique, on agence le système de protection 1 de sorte à maintenir la température inférieure à la plus basse des deux températures critiques. L'échangeur de chaleur 13 est également agencé pour maintenir le lien supraconducteur de l'élément fusible 10 à la température cryogénique entre ses deux extrémités, de préférence avec un gradient du température dans le lien supraconducteur (entre les températures notées T1 et T2 sur la figure 1) entre 2 K et 5K. L'extrémité 4^{E} du câble 4 vers la pile à combustible 6 est à température ambiante, par exemple 300 K.

On note que le système de protection 1 comprend aussi un isolant électrique et conducteur thermique, par exemple en céramique, pour isoler l'entrée et la sortie de l'élément fusible 10. L'isolant permet également l'optimisation des transferts thermiques entre l'élément fusible 10 et l'échangeur de chaleur 13.

On décrit maintenant le fonctionnement du système de protection 1, qui ressort déjà de la description qui précède.

En mode de fonctionnement normal, dans la liaison électrique 2, un courant d'alimentation (la) circule depuis la pile à combustible 6 dans le câble d'alimentation 4, dans le lien supraconducteur du système de protection 1, puis dans le câble supraconducteur 5 vers la propulsion 7

En cas de court circuit, schématiquement, au cours d'une phase A, le courant électrique devient supérieur au courant critique du lien supraconducteur 10, ce qui rompt le lien supraconducteur, le matériau passant de l'état supraconducteur à l'état normal. Au cours d'une phase B, la transition de l'état supraconducteur à l'état normal génère l'énergie de transition, notamment sous forme d'arc électrique, dont l'amplitude dépend de la puissance de l'arc plasma et de l'énergie inductive stockée dans le circuit électrique. Au cours d'une phase C, pendant laquelle la température est par exemple de l'ordre de 20 000 K, les grains de silice fondent, ce qui permet d'absorber la chaleur dégagée. L'arc plasma est refroidi puis s'éteint. Au cours d'une phase D, la silice se solidifie, ce qui bloque complètement le courant électrique. La liaison électrique 2 est ouverte et garantit une isolation galvanique.

Comme illustré sur la figure, au cours du court-circuit, le courant augmente rapidement, puis décroit entre la phase A et la phase D. La transition du supraconducteur (quench) a un effet limitateur de courant. A mesure que la résistance augmente au cours de la transition, le courant diminue. On parle de courant de court-circuit limité (d'intensité notée ILsc pour « limited short-circuit » en anglais) . A l'issue de la phase D, le courant électrique est nul. La durée entre les phases A et D, représentée par une flèche double sur la figure 3, est de quelques millisecondes.

Comme déjà expliqué, le lien supraconducteur garantit une transition rapide entre l'état supraconducteur et l'état normal quand un court-circuit se produit. Lors de la transition, le lien supraconducteur chauffe et fond, éventuellement en générant un arc électrique plasma. Du fait de la densité de courant élevée qui circule dans la liaison électrique 2, l'énergie pour rompre le lien supraconducteur est faible, ce qui assure une vitesse élevée de réaction du système de protection 1 en cas de court-circuit. Dit autrement, le dispositif 1 a peu d'inertie, ce qui rend le système de protection 1 très efficace.

De surcroît, le matériau, dans l'état normal, a une vitesse de propagation du courant électrique lente, du fait de la résistance électrique non nulle, ce qui garantit que le défaut reste local et ne se propage pas.

Grâce au système de protection 1, il est possible d'ouvrir la liaison électrique en moins de 10 ms, tout en éteignant l'arc électrique éventuel dans le même temps.

Comme il ressort déjà de la description qui précède, la présente invention présente les avantages suivants :
- réponse rapide,
- isolation galvanique,
- pertes énergétiques très faibles dans l'état normal de fonctionnement, à des courants élevés,
- pertes thermiques très faibles en conduction et distribution thermique à température cryogénique grâce à l'intégration de l'échangeur de chaleur qui assure un refroidissement actif,
- opération bidirectionnelle,
- confinement de l'arc plasma dans la boîte de l'élément fusible, sans fuite ; capacité d'absorber efficacement l'arc plasma (produit notamment sur des lignes hautes inductives) à l'ouverture du lien supraconducteur. On note que l'utilisation de la silice est très utile en cas de courts-circuits sur des lignes inductives élevées qui peuvent produire un plasma d'arc plus énergétique à l'ouverture de la liaison supraconductrice car la silice permet un avortement thermique meilleur et homogène,
- compacité et poids faible du fait de l'intégration de l'échangeur de chaleur et du câble d'alimentation qui sert d'interfaces mécanique et électrique.

Des modifications et des améliorations aux mises en œuvre décrites ci-dessus de la présente invention peuvent apparaître à l'homme du métier.

La description ci-dessus est illustrative au travers d'exemples plutôt que limitative. La portée de la présente invention est donc limitée uniquement par la portée des revendications ci-dessous.

## Revendications

1. Système de protection électrique pour une liaison électrique d'un circuit électrique d'un aéronef, par exemple un aéronef à propulsion à hydrogène et/ou comprenant un moteur supraconducteur, comprenant un élément, dit élément fusible (10), réalisé en matériau qui présente des propriétés supraconductrices dans un premier état, dit état supraconducteur, et des propriétés non supraconductrices dans un deuxième état, dit état normal, la transition de l'état supraconducteur à l'état normal dégageant une énergie de transition, le système de protection (1) comprenant également un dispositif, dit dispositif de sécurité (11), conformé pour ouvrir la liaison électrique (2) lorsque l'élément fusible (10) passe de l'état supraconducteur à l'état normal.

2. Système de protection selon la revendication 1, comprenant un échangeur de chaleur (13) connecté thermiquement à l'élément fusible (10), conformé de sorte à maintenir l'élément fusible (10) dans l'état supraconducteur.

3. Système de protection selon l'une des revendications précédentes, dans lequel le dispositif de sécurité (11) est un moyen d'absorption de l'énergie de transition.

4. Système de protection selon la revendication précédente, dans lequel le moyen d'absorption de l'énergie de transition comprend de la silice.

5. Système de protection selon la revendication précédente, dans lequel la silice est conformée pour fondre sous l'effet de l'énergie de transition, puis de solidifier en refroidissant.

6. Système de protection selon l'une des revendications 3 à 5, dans lequel le moyen d'absorption de l'énergie de transition est sous forme de gel.

7. Système de protection selon l'une des revendications précédentes, dans lequel le matériau de l'élément fusible est du BSCCO et/ou du YBCO et/ou du MgB2 et/ou ReBCO.

8. Système de protection selon l'une des revendications précédentes, comprenant ladite liaison électrique (2).

9. Circuit électrique (3), par exemple chaîne propulsive d'un aéronef, la chaîne propulsive comprenant un moteur supraconducteur, le circuit électrique comprenant le système de protection selon la revendication 8.

10. Aéronef comprenant un circuit électrique selon la revendication 9.
